# EUROPEAN PATENT APPLICATION

(11) **EP 3 301 557 A1**
(43) Date of publication of application: **04.04.2018**
(21) Application number: 17171121.1
(22) Date of filing: 15.05.2017
(51) Int. Cl.: G06F 3/0484, G06F 3/0486, H04M 1/725

(54) **METHOD, APPARATUS AND COMPUTER PROGRAM PRODUCT FOR SHARING CONTENT**

(30) Priority: 29.09.2016 CN 201610865379
(71) Applicant: Beijing Xiaomi Mobile Software Co., Ltd., Beijing 100085 (CN)
(72) Inventor: LU, Zhenzhou, Haidian District, Beijing 100085 (CN); ZHU, Yin, Haidian District, Beijing 100085 (CN); LU, Xiaochuang, Haidian District, Beijing 100085 (CN); CHEN, QiaoZhuo, Haidian District, Beijing 100085 (CN)
(74) Representative: Sackin, Robert

(57) **Abstract**

The present disclosure relates to a method and apparatus for sharing content, which belongs to the field of mobile internet technologies. In the present technical solution, after a screenshot image is generated (101. 202) and previewed (102, 202), if a predetermined operation instruction with respect to a preview image corresponding to screenshot image is detected, the icons of the applications installed on the terminal that are able for the user to share the screenshot image are displayed (104, 204). Subsequently, it is possible to share (105, 205) the screenshot image through the target application among the icons of the displayed applications by dragging the preview image.

## Description

### TECHNICAL FIELD

The present disclosure generally relates to the field of mobile internet technologies, and more particularly, to a method, an apparatus and a computer program product for sharing content.

### BACKGROUND

With the rapid development of mobile internet technologies, especially since the advent of social network services, users may share their opinions, comments, experiences and ideas whenever and wherever possible through social media platforms (e.g., the social network services). Sometimes, the user may share their information with images, such that the shared content may be more visualized. At present, when the user shares information to be published with an image through a social media platform, the target image to be used will be selected from the stored local gallery. In the case when a user wants to share an information page which he/she is reading, generally, the user will take a screenshot of the information page and store the screenshot in the local gallery, and subsequently select the screenshot from the local gallery to be shared through the social media platform. The foregoing steps of sharing are unwieldy.

### SUMMARY

Embodiments of the present disclosure provide a method and an apparatus for sharing content, the technical solution is as follows.

According to a first aspect of embodiments of the present disclosure, there is provided a method for sharing content, including:
the method being applicable in a terminal, and including:
when a screenshot operation instruction is detected, taking a screenshot of the current displayed page and generating a screenshot image corresponding to the current displayed page;
displaying a preview image corresponding to the screenshot image at a predetermined position of a display screen;
detecting whether or not an operation instruction by a user with respect to the displayed preview image is a predetermined operation instruction;
if the operation instruction by a user with respect to the displayed preview image is the predetermined operation instruction, displaying icons of applications installed on the terminal that are able for the user to share the screenshot image;
if a dragging operation with respect to the displayed preview image by the user is detected, movably displaying the preview image in accordance with the dragging operation;
when it is detected that the preview image is dragged to an icon of a target application among the icons of the displayed applications, sharing the screenshot image through the target application.
In an embodiment, the displaying a preview image corresponding to the screenshot image at a predetermined position of a display screen includes: displaying the preview image at the predetermined position of the display screen for a first predetermined time period, and if there is no operation with respect to the preview image, stopping the display of the preview image after the first predetermined time period has elapsed.

In an embodiment, the displaying a preview image corresponding to the screenshot image at a predetermined position of a display screen includes: displaying the preview image on upper right region of the display screen of the terminal; or displaying the preview image on upper left region of the display screen.

In an embodiment, the predetermined operation instruction includes: a touch instruction for a second predetermined time period or a dragging operation instruction.

In an embodiment, the displaying the icons of the applications installed on the terminal that are able for the user to share the screenshot image includes:
detecting the type of the applications installed on the terminal, and displaying in a sequence, at a predetermined region of the display screen of the terminal, the icons of the applications which meet a predetermined type condition among the applications installed on the terminal.

In an embodiment, the target application includes: a communication-type application or a text editing application.

In an embodiment, when it is detected that the preview image is dragged to an icon of a target application among the icons of the displayed applications, the sharing the screenshot image through the target application includes:
when it is detected that the preview image is dragged to the icon of the target application among the icons of the displayed applications, opening the target application;
when the target application is a communication-type application, selecting a contact to share with in the target application and sharing the screenshot image with the contact; and
when the target application is a text editing application, inserting the screenshot image into the target editing page of the text editing application.

According to a second aspect of embodiments of the present disclosure, there is provided an apparatus for sharing content, including:
a screenshot operation module, configured to take a screenshot of the current displayed page when a screenshot operation instruction is detected, and generate a screenshot image corresponding to the current displayed page;
an image display module, configured to display a preview image corresponding to the screenshot image at a predetermined position of the display screen;
an instruction detection module, configured to detect whether an operation instruction by a user with respect to the displayed preview image is an predetermined operation instruction;
a program display module, configured to if the operation instruction by a user with respect to the displayed preview image is the predetermined operation instruction, display icons of applications installed on the terminal that are able for the user to share the screenshot image;
an instruction processing module, configured to if a dragging operation with respect to the displayed preview image by the user is detected, movably display the preview image in accordance with the dragging operation; and
a content sharing module, configured to when it is detected that the preview image is dragged to an icon of a target application among the icons of the displayed applications, share the screenshot image through the target application.

In an embodiment, the image display module is configured to display the preview image at the predetermined position of the display screen for a first predetermined time period, and if there is no operation with respect to the preview image, stop the display of the preview image after the first predetermined time period has elapsed.

In an embodiment, the image display module is configured to display the preview image on upper right region of the display screen of the terminal, or display the preview image on upper left region of the display screen.

In an embodiment, the predetermined operation instruction includes: a touch instruction for a second predetermined time period or a dragging operation instruction.

In an embodiment, the program display module is configured to detect the type of the applications installed on the terminal, and display in a sequence, at a predetermined region of the display screen of the terminal, the icons of the applications which meet a predetermined type condition among the applications installed on the terminal.

In an embodiment, the target application includes: a communication-type application or a text editing application.

In an embodiment, the content sharing module includes:
a program running sub-module, configured to when it is detected that the preview image is dragged to the icon of the target application among the icons of the displayed applications, open the target application;
a first sharing sub-module, configured to when the target application is the communication-type application, select a contact to share with in the target application and share the screenshot image with the contact; and
a second sharing sub-module, configured to when the target application is the text editing application, insert the screenshot image into a target editing page of the text editing application.

According to a third aspect of embodiments of the present disclosure, there is provided an apparatus for sharing content, including:
a processor; and
a memory for storing instruction executable by the processor;
wherein the processor is configured to:
when a screenshot operation instruction is detected, take a screenshot of the current displayed page and generate a screenshot image corresponding to the current displayed page;
display a preview image corresponding to the screenshot image at a predetermined position of a display screen;
detect whether or not an operation instruction by a user with respect to the displayed preview image is a predetermined operation instruction;
if the operation instruction by a user with respect to the displayed preview image is the predetermined operation instruction, display icons of applications installed on the terminal that are able for the user to share the screenshot image;
if a dragging operation with respect to the displayed preview image by the user is detected, movably display the preview image in accordance with the dragging operation; and
when it is detected that the preview image is dragged to an icon of a target application among the icons of the displayed applications, share the screenshot image through the target application.

In one particular embodiment, the steps of the method for sharing content are determined by computer program instructions.

Consequently, according to a fourth aspect, the present disclosure is also directed to a computer program for executing the steps of a method for sharing content as described above when this program is executed by a computer.

This program can use any programming language and take the form of source code, object code or a code intermediate between source code and object code, such as a partially compiled form, or any other desirable form.

The present disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present disclosure may have the following beneficial effects.

In the present technical solution, after a screenshot image is generated and previewed, if a predetermined operation instruction with respect to a preview image corresponding to screenshot image is detected, display icons of applications installed on the terminal that are able for the user to share the screenshot image. Subsequently, it is possible to share the screenshot image through the target application among the icons of the displayed applications by dragging the preview image, which makes the sharing operation of screenshot image more convenient.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for sharing content according to an exemplary embodiment;
Fig. 2 is a flow chart of a method for sharing content according to an exemplary embodiment;
Fig. 3 is a schematic diagram showing that a screenshot image is previewed on a display screen of a terminal;
Fig. 4A is a schematic diagram showing that icons of applications provided for a user to share the screenshot image are displayed on a terminal, according to an exemplary embodiment;
Figs. 4B to 4D are schematic diagrams showing that a preview image is dragged to a target application among the applications displayed on a terminal, according to an exemplary embodiment;
Figs. 5A to 5E are schematic diagrams of a process of sharing a screenshot image in a contact conversation page, according to an exemplary embodiment;
Figs. 6A to 6D are schematic diagrams of a process of sharing a screenshot image in a call history page, according to an exemplary embodiment;
Figs. 7A to 7C are schematic diagrams of a process of sharing a screenshot image in a notepad, according to an exemplary embodiment;
Fig. 8 is a block diagram showing an apparatus for sharing content according to an exemplary embodiment;
Fig. 9 is a block diagram showing a content sharing module of an apparatus shown in Fig. 8 according to an exemplary embodiment; and
Fig. 10 is a block diagram showing an apparatus for sharing content according to an exemplary embodiment.

Exemplary embodiments of the present disclosure are shown in the above drawings, and detailed description will be provided hereinafter. These drawings and literal descriptions are not intended to limit the scope of the present disclosure in any way, but to convey the conception of the present disclosure to one of ordinary skill in this art by exemplary embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terminology used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms "first", "second", "third", etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to a judgment" depending on the context.

The technical solution provided by the embodiment of the present disclosure is applicable in user terminals, the terminals may be variety of terminals capable of performing touch operation via touch screen, e.g., the touch screen terminals having a processor and a display output device, such as a smart phone, a tablet, a Personal Digital Assistant (PDA) and the like.

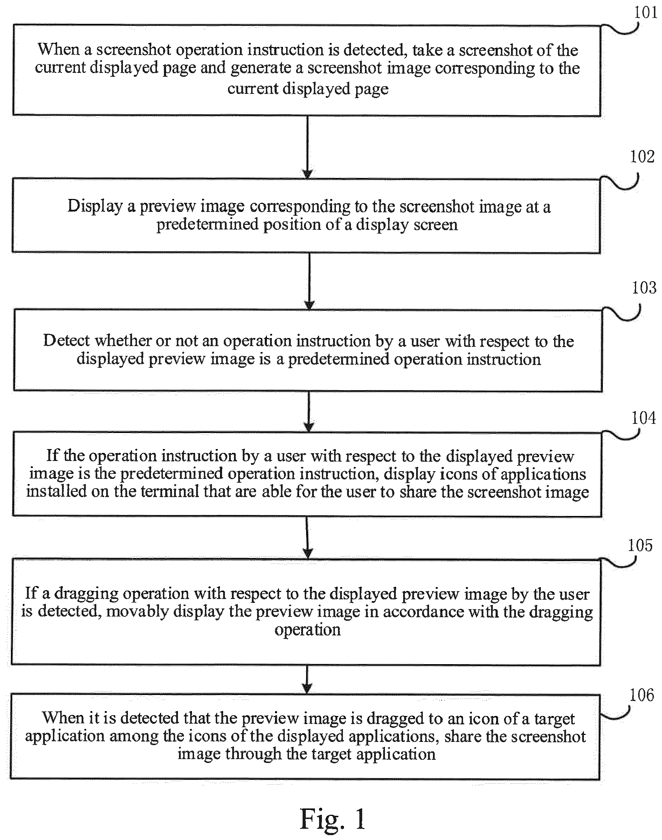

The embodiments of the present disclosure provide a method for sharing content which is applicable in the above terminals. Referring to Fig. 1, Fig. 1 is a flow chart of a method for sharing content according to an exemplary embodiment, the method may include the following steps.

In step 101, when a screenshot operation instruction is detected, a screenshot of a current displayed page is taken and a screenshot image corresponding to the current displayed page is generated.

In an embodiment, when a user is browsing contents through a terminal, if a preferred content is seen by the user, the user can save the content by taking a screenshot. For example, the user may send a screenshot instruction to the terminal by a shortcut operation button or an instruction, and after the screenshot instruction is received by the terminal, the terminal takes a screenshot of the current displayed page and generates, for the user, a screenshot image corresponding to the current displayed page. The screenshot image may be stored, be shared or be processed with other operation by the user. In an embodiment, as a default operation, the generated screenshot image is stored in the local gallery.

In step 102, a preview image corresponding to the screenshot image is displayed at a predetermined position of a display screen.

In the embodiment of the present disclosure, generating a preview image corresponding to the screenshot image at the predetermined position of the display screen may include:
displaying the preview image at the predetermined position of the display screen for a first predetermined time period; and
if there is no operation with respect to the preview image, stopping the display of the preview image after the first predetermined time period has elapsed.

Alternatively, the displaying the preview image corresponding to the screenshot image at the predetermined position of a display screen may include but not limit to:
displaying the preview image on upper right region of the display screen of the terminal; or displaying the preview image on upper left region of the display screen.

In this way, the terminal may display the preview image of the screenshot image at the predetermined position of the display screen for a predetermined time period, such that the user could see the screenshot image in the current display screen without shifting to the local gallery. It is convenient for the user to implement some operations (such as marking, sharing, editing and the like) to the screenshot image.

In an embodiment, the preview image corresponding to the screenshot image may also be referred to as a thumbnail corresponding to the screenshot image. Both the preview image and the thumbnail are used as an entrance to rapidly exhibit the screenshot image to the user, such that the user may check the screenshot image rapidly through the preview image or the thumbnail without shifting to the local gallery. In the embodiment, both the thumbnail and the preview image are referred to as preview image.

In step 103, it is detected whether or not an operation instruction by a user with respect to the displayed preview image is a predetermined operation instruction.

In an embodiment, the predetermined operation instruction may be a touch instruction for a second predetermined time period or a dragging operation instruction.

In step 104, if the operation instruction by a user with respect to the displayed preview image is the predetermined operation instruction, the icons of the applications installed on the terminal that are able for the user to share the screenshot image are displayed.

In an embodiment, the displaying the icons of the applications installed on the terminal that are able for the user to share the screenshot image may include:
detecting the type of the applications installed on the terminal, and displaying in a sequence, at a predetermined region of the display screen of the terminal, the icons of the applications which meet a predetermined type condition among the applications installed on the terminal.

In an embodiment, the applications which meet a predetermined type condition refers to the applications in which the preview image or screenshot image may be shared, such as a communication-type application, a text editing application or the like. For example, the text editing application may be an office application (such as word, PPT or the like) or a file editing application (such as notepad, text document or the like); the communication-type application may be a messaging application such as an instant messaging application, a short message application, a telephony application, a social networking service (SNS) or the like.

In step 105, if a dragging operation with respect to the displayed preview image by the user is detected, the preview image is movably displayed in accordance with the dragging operation.

In step 106, when it is detected that the preview image is dragged to an icon of a target application among the icons of the displayed applications, the screenshot image is shared through the target application.

In an embodiment, the target application includes a communication-type application or a text editing application.

In an embodiment, when it is detected that the preview image is dragged to an icon of a target application among the icons of the displayed applications, the sharing the screenshot image through the target application may include:
when it is detected that the preview image is dragged to the icon of the target application among the icons of the displayed applications, opening the target application;
when the target application is a communication-type application, selecting a contact to share with in the target application and sharing the screenshot image with the contact; and
when the target application is a text editing application, inserting the screenshot image into the target editing page of the text editing application.

In the present technical solution, after a screenshot image is generated and previewed, if a predetermined operation instruction with respect to a preview image corresponding to screenshot image is detected, icons of applications installed on the terminal that are able for the user to share the screenshot image are displayed. Subsequently, it is possible to share the screenshot image through the target application among the icons of the displayed applications by dragging the preview image, which makes the sharing operation of screenshot image more convenient.

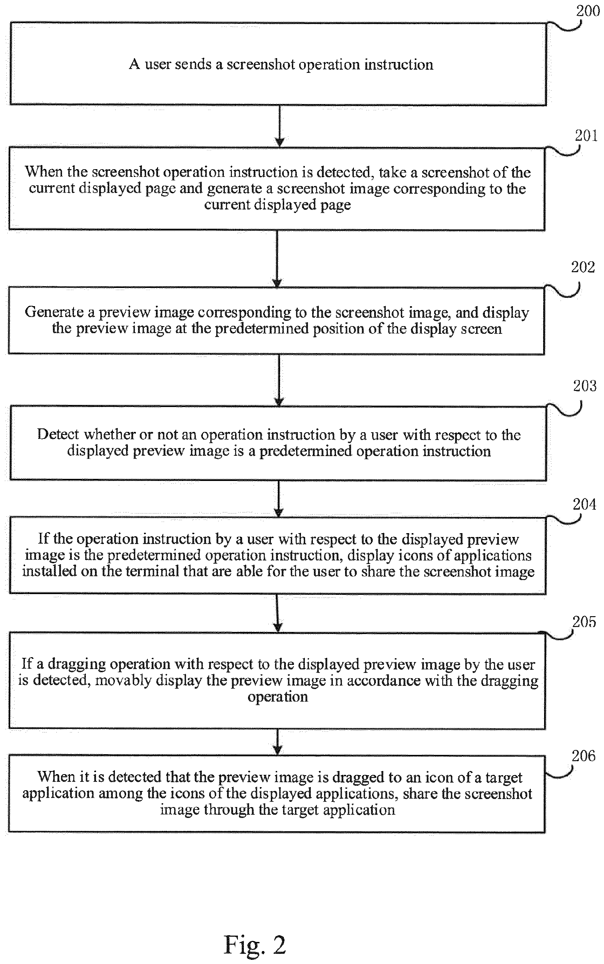

Referring to Fig. 2, Fig. 2 is a method for sharing content according to an exemplary embodiment, the method is applicable in the above terminal and may include the following steps.

In step 200, a user sends a screenshot operation instruction.

In step 201, when the screenshot operation instruction is detected, a screenshot of the current displayed page is taken and a screenshot image corresponding to the current displayed page is generated.

In an embodiment, when a user is browsing contents through a terminal, if a preferred content is seen by the user, the user can save the content by taking a screenshot. For example, the user may send a screenshot instruction to the terminal by a shortcut operation button or an instruction, and after the screenshot instruction is received by the terminal, the terminal takes a screenshot of the current displayed page and generates a screenshot image corresponding to the current displayed page for the user. The screenshot image may be stored, be shared or be processed with other operation by the user. In an embodiment, as a default operation, the generated screenshot image is stored in the local gallery.

In step 202, a preview image corresponding to the screenshot image is generated, and the preview image is displayed at the predetermined position of the display screen.

In the embodiment, the displaying the preview image at the predetermined position of the display screen may include:
displaying the preview image at the predetermined position of the display screen for a first predetermined time period, the size of the predetermined region being in accordance with the displaying size of the preview image; and
if there is no operation with respect to the preview image, stopping the display of the preview image after the first predetermined time period has elapsed.

In an embodiment, the first predetermined time period, such as 2 seconds or 3 seconds, may be preset in the operation system according to different conditions, and the present disclosure is not limited thereto.

Alternatively, the displaying the preview image corresponding to the screenshot image at the predetermined position of a display screen may include but not limit to:
displaying the preview image on upper right region of the display screen of the terminal; or displaying the preview image on upper left region of the display screen.

In this way, the terminal may display the preview image of the screenshot image for the user at the predetermined position of the display screen for a predetermined time period, such that the user could see the screenshot image in the current display screen without shifting to the local gallery. It is convenient for the user to implement some operations (such as marking, sharing, editing and the like) to the screenshot image.

In an embodiment, the preview image corresponding to the screenshot image may also be referred to as a thumbnail corresponding to the screenshot image. Both the preview image and the thumbnail are used as an entrance to rapidly exhibit the screenshot image to the user, such that the user may check the screenshot image rapidly through the preview image or the thumbnail without shifting to the local gallery. In the embodiment, both the thumbnail and the preview image are referred to as preview image.

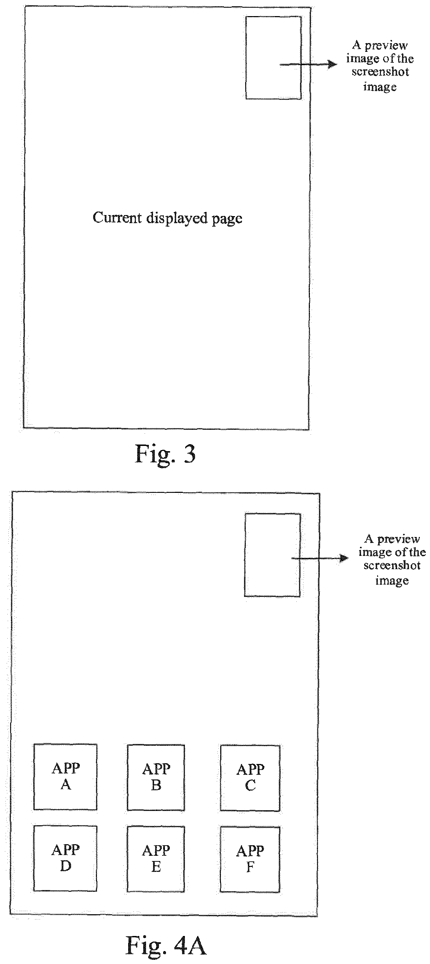

Referring to Fig. 3, Fig. 3 is a schematic diagram showing that a screenshot image is previewed on a display screen of a terminal, the preview image of the screenshot image is displayed on upper right region of the display screen of the terminal.

In step 203, it is detected whether or not an operation instruction by a user with respect to the displayed preview image is a predetermined operation instruction.

In an embodiment, the predetermined operation instruction includes a touch instruction for a second predetermined time period or a dragging operation instruction. In the embodiment of the present disclosure, the change of capacitance of the region for displaying the preview image is detected to determine whether the user has performed an operation to the preview image, and it is determined, by the change of the capacitance, whether the operation instruction with respect to the displayed preview image by the user is a touch instruction for a second predetermined time period or a dragging operation instruction with respect to the preview image. The second predetermined time period, such as 1 second or 2 seconds, may be preset in operation system according to different conditions, and the embodiment of the present disclosure is not limited there to.

In step 204, if the operation instruction by a user with respect to the displayed preview image is the predetermined operation instruction, icons of applications installed on the terminal that are able for the user to share the screenshot image are displayed.

In an embodiment, the displaying the icons of the applications installed on the terminal that are able for the user to share the screenshot image may include:
detecting the type of the applications installed on the terminal, and displaying in a sequence, at a predetermined region of the display screen of the terminal, the icons of the applications which meet a predetermined type condition among the applications installed on the terminal.

In an embodiment, the applications which meet a predetermined type condition refers to the applications in which the preview image or screenshot image may be shared. For example, a communication-type application or a text editing application installed on the terminal may be selected displayed in a sequence on a predetermined region of the display screen of the terminal (such as the lower region of the display screen). Thus, the user may drag the preview image to the displayed application which can perform the operation of sharing content, thereby realizing the sharing operation of the screenshot image through such an application.

Here, the displaying, in a sequence, at a predetermined region of the display screen of the terminal, the icons of the applications which meet a predetermined type condition among the applications installed on the terminal may include: determining the display sequence in accordance with an installation time of the applications which meet the predetermined type condition, for example, displaying the application which is installed earlier ahead; or, determining the display sequence in accordance with a count or a frequency of use of the applications which meet the predetermined type condition, for example, displaying the application with higher count or frequency of use ahead.

In an embodiment, the displaying the icons of the applications installed on the terminal that are able for the user to share the screenshot image may include: displaying the icons of the applications which are most frequently used by the user that are able for the user to share the screenshot image on a predetermined region of the terminal. Here, the applications used by the user which could perform the operation for sharing content may be analyzed, and the icons of the applications that are able for the user to share content and has a frequency of use higher than a predetermined value are displayed on the predetermined region of the display screen of the terminal, so as to be selected by the user.

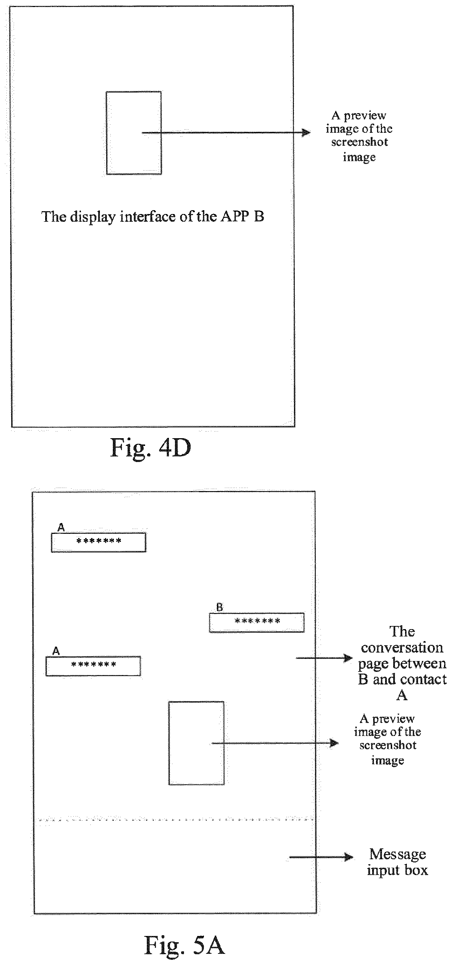

Referring to Fig. 4A, Fig. 4A is a schematic diagram exemplary showing that icons of applications provided for a user to share the screenshot image are displayed on a terminal. When a user long presses or drags the preview image corresponding to the screenshot image displayed on the display screen, it may be triggered that the icons of the applications installed on the terminal that are able for the user to share the screenshot image are displayed, for example, the icons can be displayed on the lower region of the display screen in a sequence, such that the user can select an application from the displayed applications to share the screenshot image.

In step 205, if a dragging operation with respect to the displayed preview image by the user is detected, the preview image is movably displayed in accordance with the dragging operation.

In an embodiment, after a terminal displays the icons of the applications provided for a user to share content, the user may share the screenshot image corresponding to the preview image by dragging the preview image. If a dragging operation with respect to the preview image by the user is detected, the preview image is movably displayed in accordance with the dragging operation.

In step 206, when it is detected that the preview image is dragged to an icon of a target application among the icons of the displayed applications, the screenshot image is shared through the target application.

In an embodiment, the target application may include but not limit to: a communication-type application or a text editing application.

In an embodiment, the text editing application may be an office application (such as word, PPT or the like) or a file editing application (such as notepad, text document or the like); the communication-type application may be a messaging application such as an instant messaging application, a short message application, a telephony application, a social networking service (SNS) or the like.

In an embodiment, when it is detected that the preview image is dragged to an icon of a target application among the icons of the displayed applications, the sharing the screenshot image through the target application includes:
when it is detected that the preview image is dragged to the icon of the target application among the icons of the displayed applications, opening the target application;
when the target application is a communication-type application, selecting a contact to share with in the target application and sharing the screenshot image with the contact; and
when the target application is a text editing application, inserting the screenshot image into the target editing page of the text editing application.

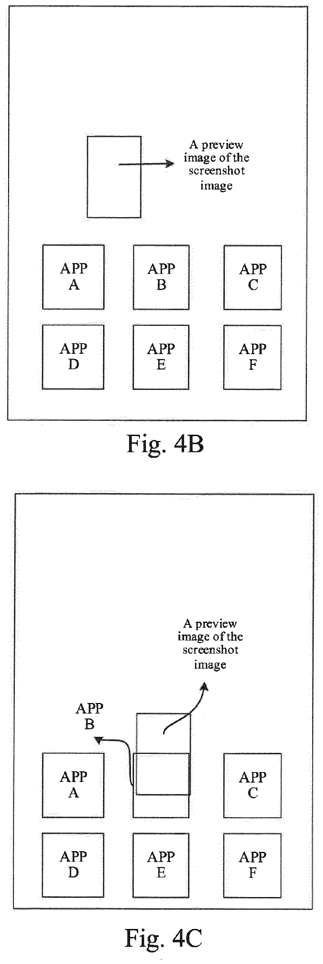

Referring to Fig. 4B to 4D, Fig. 4B to 4D are schematic diagrams showing that a preview image is dragged to a target application among the applications displayed on a terminal. As shown in Fig. 4B, when the dragging operation by a user with respect to the displayed preview image is detected, the preview image is movably displayed in accordance with the dragging operation; when the preview image is dragged to the icon of the target application among the icons of the applications displayed on the predetermined region of the terminal's screen, the target application is opened, as shown in Fig. 4C to 4D. Subsequently, the user can share the screenshot image through the opened target application.

In an embodiment, if the application is a communication-type application, the user can select a contact to share with in a contact conversation page, a page of the address book or an interface of the call history page of the opened communication-type application, and share the screenshot image with the contact.

In an embodiment, the sharing the screenshot image with the contact in the communication-type application may include: opening the contact conversation page in the communication-type application, and sending the screenshot image to the contact of the contact conversation; or opening the page of address book of the communication-type application, selecting a contact from the address book, and sending the screenshot image to the selected contact; or opening the interface of the call history page of the communication-type application, selecting a contact from the interface of the call history page, and sending the screenshot image to the selected contact.

In an embodiment, the sharing the screenshot image with the contact in the communication-type application may further include: dragging the preview image to a contact conversation page, a page of the address book or an interface of the call history page of the opened target application, and dragging the preview image to the target position of the contact conversation page, the page of the address book or the interface of the call history page, and sending the screenshot image to the contact corresponding to the target position. Here, the sending the screenshot image to the contact of the communication-type application means that the original image is sent to the contact of the communication-type application.

In an embodiment, the target position may be: the region of the message input box in the contact conversation page, the position of one contact item in the page of the address book or the position of a call history item in the interface of the call history page.

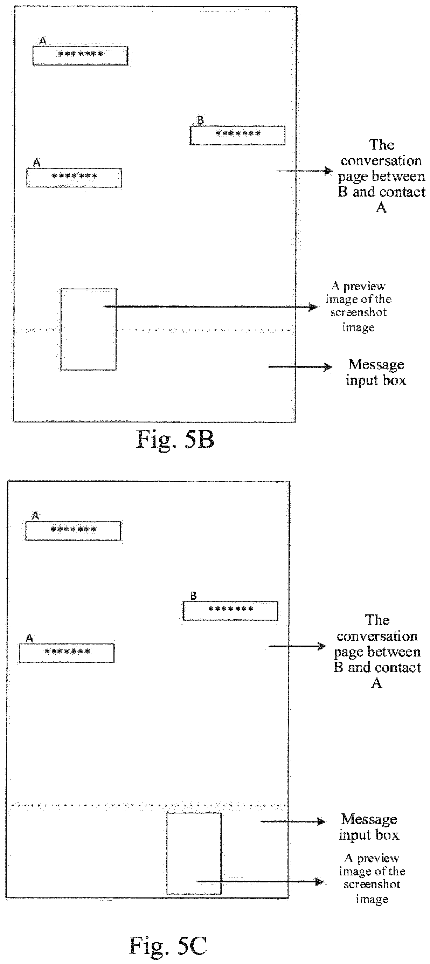

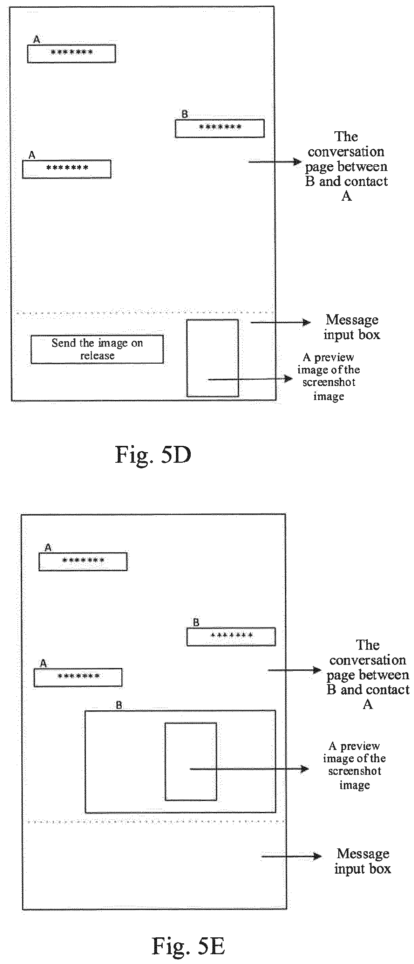

For example, in an embodiment, the contact conversation page in the communication-type application is opened, and if it is detected that the preview image is dragged into the message input box of the contact conversation page in the communication-type application, the screenshot image is sent to the contact of the current conversation. Referring to Figs. 5A to 5E, Figs. 5A to 5E are schematic diagrams of a process of sharing a screenshot image in a contact conversation page, according to an exemplary embodiment. The preview image is dragged to the display page of the opened target application B (APP B), here, the display interface of the application B is a contact conversation page, and the preview image is also displayed on the contact conversation page, as shown in Fig. 5A. After detecting the dragging operation by the user with respect to the preview image, the preview image on the current display interface is moved according to the dragging operation, as shown in Fig. 5B. When the preview image is dragged to the region of the message input box in the conversation page, if it is detected that the dragging with respect to the preview image is released by the user, the preview image will be input into the message input box, as shown in Fig. 5C. If a sending request by the user with respect to the preview image in the message input box is detected, the preview image is sent to the contact of the current conversation, as shown in Fig. 5E. Accordingly, the screenshot image is shared with the contact. In an embodiment, before sharing the screenshot image with the contact, the user may be prompted for the operation of sharing the image with the contact. As shown in Fig. 5D, the message such as "send the image on release" are provided for the user, which prompts the user that the sending operation with respect to the screenshot image can be realized if the dragging with respect to preview image is released.

In an embodiment, the process of the above Fig. 5A to 5E can be simplified. When it is detected that the preview image is dragged to the region of the message input box in the conversation page, directly remind the user whether or not to send the image (such as "send the image on release" is displayed), when it is detected that the dragging with respect to the preview image is released, directly send the screenshot image corresponding to the preview image to the contact of the current conversation.

For example, in an embodiment, if a page of the address book in the communication-type application is opened and it is detected that the preview image is dragged to one contact item in the page of the address book, the screenshot image is sent to the contact. In an embodiment, if a call history page in the communication-type application is opened and it is detected that the preview image is dragged to a position of one call history item in the call history page, the screenshot image is sent to the contact corresponding to the one call history item.

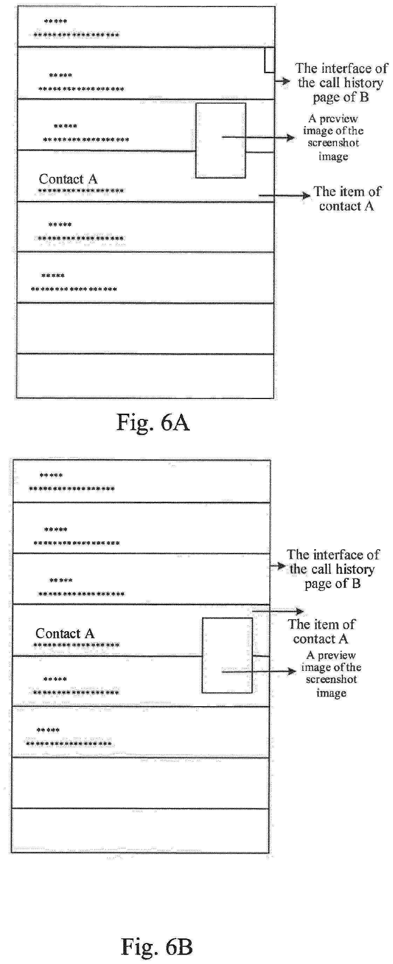

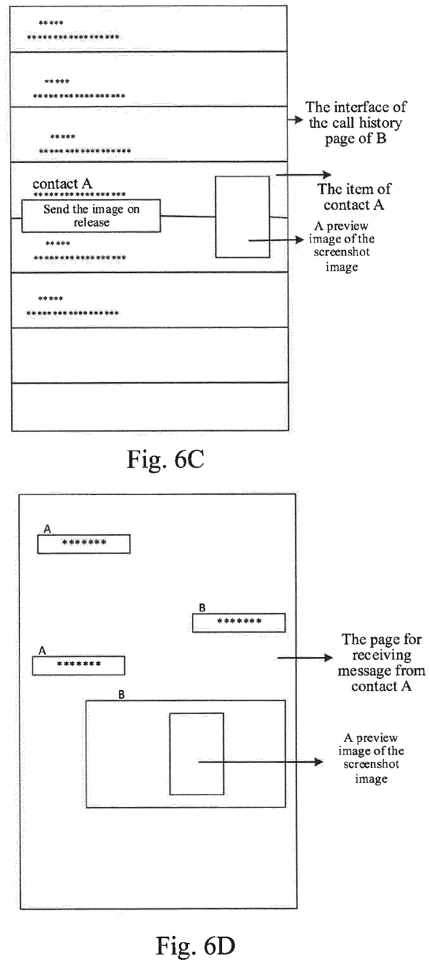

Referring to Figs. 6A to 6D, Figs. 6A to 6D are schematic diagrams of a process of sharing a screenshot image in a call history page. The preview image is dragged to the target application B, and the target application B is opened. Herein, the display interface of the application B is a call history page, and the preview image is also displayed on the call history page, as shown in Fig. 6A. After detecting the dragging operation by the user with respect to the preview image, the preview image is moveably displayed on the current display interface in accordance with the dragging operation, as shown in Fig. 6B. When the preview image is dragged to one contact item in the page of the address book, if it is detected that the dragging with respect to the preview image is released, the screenshot image is sent to the contact corresponding to the call history page, as shown in Fig. 6D. Accordingly, the screenshot image is shared with the contact. In an embodiment, before sharing the screenshot image with the contact, the user may be prompted for the operation of sharing the image with the contact. As shown in Fig. 6C, the message such as "send the image on release" are provided for the user, which reminds the user that the sending operation with respect to the screenshot image can be realized if the dragging with respect to preview image is released.

In an embodiment, the process of the above Fig. 6A to 6D can be simplified. When it is detected that the preview image is dragged to the region of one call history item on the interface of the call history page, the user is directly prompted for the operation of sending the image (for example, "send the image on release" is displayed), when it is detected that the dragging with respect to the preview image is released, directly send the screenshot image corresponding to the preview image to the contact corresponding to the call history page.

In another embodiment, when sending the screenshot image to the contact in the communication-type application to share the screenshot image, instead of sending the original image of the screenshot image to the contact in the communication-type application, it is possible to send the preview image corresponding to the screenshot image only. In this way, it is also possible to share the screenshot image with a slightly lower resolution of the screenshot image received by the contact. However, the amount of data during the communication can be decreased, such that the sending speed while sharing the screenshot image can be increased in the case when the network condition is poor.

When the target application is other communication-type applications, the manner of sending the screenshot image to the contacts in the communication-type application is similar with the above manner described in accordance with the conversation page or the call history page, and the repeated description will be omitted.

In an embodiment, when the target application is a text editing application, after the text editing application is opened, the preview image may be dragged and the screenshot image can be insert into the target position of the text editing page, thereby sharing the screenshot image.

In an embodiment, when the target application is a text editing application, the inserting the screenshot image into the target editing page of the text editing application may include: when the target editing page is a notepad editing page, if it is detected that the preview image is moved to one row in the notepad editing page, inserting the preview image into the one row in the notepad editing page; or, when the target editing page is an office application, if it is detected that the preview image is moved to some position in the text editing page, inserting the screenshot image into the position.

In an embodiment, the original image of the screenshot image may be inserted into some position in the editing page; or, the preview image corresponding to the screenshot image may be inserted into some position in the editing page. In the latter case, it may reduce the storage space of the edited file because the preview image occupies less storage space.

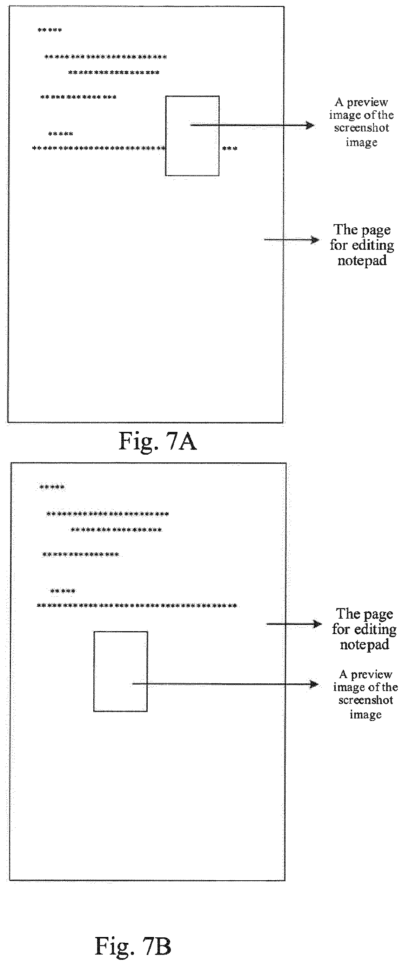

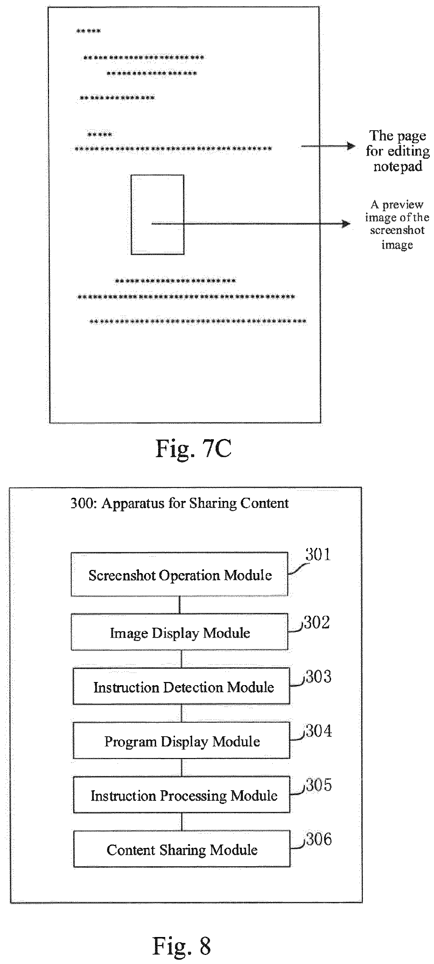

Referring to Figs. 7A to 7C, Figs. 7A to 7C are schematic diagrams of a process of sharing a screenshot image in a notepad, according to an exemplary embodiment. The preview image is dragged to the displayed page of the target application B, and the target application B is opened. Herein, the displayed page of the application B is a page for editing notepad, and the preview image is also displayed on the page for editing notepad, as shown in Fig. 7A. After detecting the dragging operation by the user with respect to the preview image, the preview image on the current display interface is moved in accordance with the dragging operation, as shown in Fig. 7B. When the preview image is dragged to one row of the page for editing notepad, if it is detected that the dragging with respect to the preview image is released by the user, the preview image will be inserted into the one row of the page for editing notepad, as shown in Fig. 7C. Accordingly, the screenshot image may be shared.

When the target application is other text editing applications, the manner of inserting the screenshot image into the text editing application is similar with the manner described in the above process about inserting the screenshot image into the page for editing notepad, and the repeated description will be omitted.

In an embodiment, before sharing the screenshot image, the method may further include: prompting the user whether or not to share the screenshot image so as to avoid inadvertent touch operation.

In the present technical solution, after a screenshot image is generated and previewed, if a predetermined operation instruction with respect to a preview image corresponding to screenshot image is detected, the icons of the applications installed on the terminal that are able for the user to share the screenshot image are displayed. Subsequently, it is possible to share the screenshot image through the target application among the icons of the displayed applications by dragging the preview image, which makes the sharing operation of screenshot image more convenient.

The following is embodiments of devices according to the present disclosure, which may be configured to perform the embodiments of methods of the present disclosure. Details not disclosed in the embodiments of devices may be referred to the embodiments of methods.

Fig. 8 is a block diagram showing an apparatus 300 for sharing content according to an exemplary embodiment, and the apparatus 300 may be implemented as part or whole of a terminal by software, hardware or combination of the both, the terminal may be an electronic display apparatus with a touch screen, such as a mobile phone, a tablet or the like. The apparatus 300 may include:
a screenshot operation module 301, configured to take a screenshot of the current displayed page when a screenshot operation instruction is detected, and generate a screenshot image corresponding to the current displayed page;
an image display module 302, configured to display a preview image corresponding to the screenshot image at a predetermined position of the display screen;
an instruction detection module 303, configured to detect whether an operation instruction by a user with respect to the displayed preview image is an predetermined operation instruction;
a program display module 304, configured to if the operation instruction by a user with respect to the displayed preview image is the predetermined operation instruction, display icons of applications installed on the terminal that are able for the user to share the screenshot image;
an instruction processing module 305, configured to if a dragging operation with respect to the displayed preview image by the user is detected, movably display the preview image in accordance with the dragging operation; and
a content sharing module 306, configured to when it is detected that the preview image is dragged to an icon of a target application among the icons of the displayed applications, share the screenshot image through the target application.

In an embodiment, the image display module 302 may be configured to display the preview image at the predetermined position of the display screen for a first predetermined time period, and if there is no operation with respect to the preview image, stop the display of the preview image after the first predetermined time period has elapsed.

In another embodiment, the image display module 302 is configured to display the preview image on upper right region of the display screen of the terminal, or display the preview image on upper left region of the display screen.

In an embodiment, the predetermined operation instruction includes: a touch instruction for a second predetermined time period or a dragging operation instruction.

In an embodiment, the program display module 304 is configured to detect the type of the applications installed on the terminal, and display in a sequence, at a predetermined region of the display screen of the terminal, the icons of the applications which meet a predetermined type condition among the applications installed on the terminal.

In an embodiment, the target application includes: a communication-type application or a text editing application.

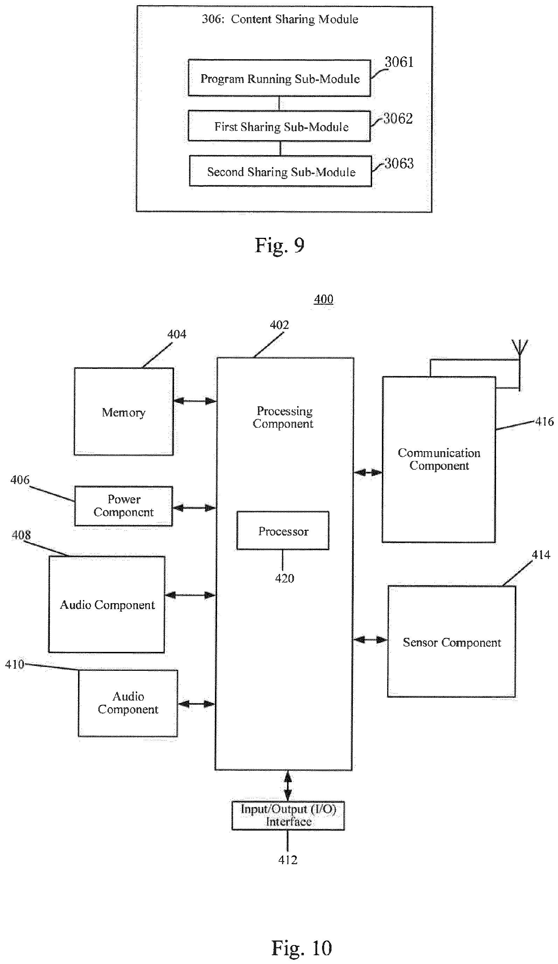

Referring to Fig. 9, the content sharing module 306 as shown in Fig. 8 may include:
a program running sub-module 3061, configured to when it is detected that the preview image is dragged to the icon of the target application among the icons of the displayed applications, open the target application;
a first sharing sub-module 3062, configured to when the target application is a communication-type application, select a contact to share with in the target application and share the screenshot image with the contact; and
a second sharing sub-module 3063, configured to when the target application is a text editing application, insert the screenshot image into the target editing page of the text editing application.

In the present technical solution, after a screenshot image is generated and previewed, if a predetermined operation instruction with respect to a preview image corresponding to screenshot image is detected, the icons of the applications installed on the terminal that are able for the user to share the screenshot image are displayed. Subsequently, it is possible to share the screenshot image through the target application among the icons of the displayed applications by dragging the preview image, which makes the sharing operation of screenshot image more convenient.

With respect to the apparatus in the above embodiment, the detailed manner of operation executed by respective modules thereof has been described in the embodiments of the disclosed method, the repeated description will be omitted.

Referring Fig. 10, Fig. 10 is a block diagram showing an apparatus 400 for sharing content according to an exemplary embodiment. For example, the apparatus 400 may be an electronic display apparatus with a touch screen, such as a mobile phone, a tablet or the like.

Referring to Fig. 10, the apparatus 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the apparatus 400, such as the operations associated with display, telephone calls, data communications, camera operations, and recording operations. The processing component 402 may include one or more processors 420 to execute instructions to perform all or a part of the steps in the above-described methods. In addition, the processing component 402 may include one or more modules which facilitate the interaction between the processing component 402 and other components. For example, the processing component 402 may include a multimedia module to facilitate the interaction between the multimedia component 408 and the processing component 402.

The memory 404 is configured to store various types of data to support the operations of the apparatus 400. Examples of such data include instructions for any application or method operated on the apparatus 400, contact data, phonebook data, messages, images, videos, and the like. The memory 404 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power supplies, and other components associated with the generation, management, and distribution of power in the apparatus 400.

The multimedia component 408 includes a screen providing an output interface between the apparatus 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive external multimedia data while the apparatus 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the apparatus 400 is in an operation mode, such as a call mode, a recording mode, or a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and a peripheral interface module, such as a keyboard, a click wheel, a button, or the like. The buttons may include, but are not limited to, a home button, a volume button, a starting button, and a locking button.

The sensor component 414 includes one or more sensors to provide status assessments of various aspects of the apparatus 400. For example, the sensor component 414 may detect an open/closed status of the apparatus 400, relative positioning of components, e.g., the display and the keypad, of the apparatus 400, a change in position of the apparatus 400 or a component of the apparatus 400, a presence or absence of user contact with the apparatus 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communications, wired or wirelessly, between the apparatus 400 and other apparatuses. The apparatus 400 may access a wireless network based on a communication standard, such as WiFi, 2G, or 3G, or a combination thereof. In one exemplary embodiment, the communication component 416 receives a broadcast signal or broadcast associated notification information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 400 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 404, executable by the processor 420 in the apparatus 400, for performing the above-described methods for sharing content. For example, the non-transitory computer-readable storage medium may be a ROM, a random access memory (RAM), a compact disc read-only memory (CD-ROM), a magnetic tape, a floppy disc, an optical data storage apparatus, or the like.

A non-transitory computer-readable storage medium, when the instructions of the storage medium is executed by the processor of the apparatus 400, the apparatus 400 can execute the methods for sharing content in the above embodiments.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for sharing content, which is applicable in a terminal, the method comprising:
when a screenshot operation instruction is detected, taking (101, 201) a screenshot of the current displayed page and generating (101. 202) a screenshot image corresponding to the current displayed page;
displaying (102, 202) a preview image corresponding to the screenshot image at a predetermined position of a display screen;
detecting (103, 203) whether or not an operation instruction by a user with respect to the displayed preview image is a predetermined operation instruction;
if the operation instruction by a user with respect to the displayed preview image is the predetermined operation instruction, displaying (104, 204) icons of applications installed on the terminal that are able for the user to share the screenshot image;
if a dragging operation with respect to the displayed preview image by the user is detected, movably displaying (105, 205) the preview image in accordance with the dragging operation; and
when it is detected that the preview image is dragged to an icon of a target application among the icons of the displayed applications, sharing (106, 206) the screenshot image through the target application.

2. The method according to claim 1, wherein the displaying (102, 202) a preview image corresponding to the screenshot image at a predetermined position of a display screen comprises: displaying the preview image at the predetermined position of the display screen for a first predetermined time period, and if there is no operation with respect to the preview image, stopping the display of the preview image after the first predetermined time period has elapsed.

3. The method according to claim 1 or 2, wherein the displaying (102, 202) a preview image corresponding to the screenshot image at a predetermined position of a display screen comprises:
displaying the preview image on upper right region of the display screen of the terminal; or
displaying the preview image on upper left region of the display screen.

4. The method according to any preceding claim, wherein the predetermined operation instruction comprises: a touch instruction for a second predetermined time period or a dragging operation instruction.

5. The method according to any preceding claim, wherein the displaying (104, 204) icons of applications installed on the terminal that are able for the user to share the screenshot image comprises:
detecting the type of the applications installed on the terminal, and displaying in a sequence, at a predetermined region of the display screen of the terminal, the icons of the applications which meet a predetermined type condition among the applications installed on the terminal.

6. The method according to any preceding claim, wherein the target application comprises: a communication-type application or a text editing application.

7. The method according to claim 6, wherein when it is detected that the preview image is dragged to an icon of a target application among the icons of the displayed applications, the sharing (106, 206) the screenshot image through the target application comprises:
when it is detected that the preview image is dragged to the icon of the target application among the icons of the displayed applications, opening the target application;
when the target application is a communication-type application, selecting a contact to share with in the target application and sharing the screenshot image with the contact; and
when the target application is a text editing application, inserting the screenshot image into the target editing page of the text editing application.

8. An apparatus for sharing content, the apparatus comprising:
a screenshot operation module (301), configured to take a screenshot of the current displayed page when a screenshot operation instruction is detected, and generate a screenshot image corresponding to the current displayed page;
an image display module (302), configured to display a preview image corresponding to the screenshot image at a predetermined position of the display screen;
an instruction detection module (303), configured to detect whether an operation instruction by a user with respect to the displayed preview image is an predetermined operation instruction;
a program display module (304), configured to if the operation instruction by a user with respect to the displayed preview image is the predetermined operation instruction, display icons of applications installed on the terminal that are able for the user to share the screenshot image;
an instruction processing module (305), configured to if a dragging operation with respect to the displayed preview image by the user is detected, movably display the preview image in accordance with the dragging operation; and
a content sharing module (306), configured to when it is detected that the preview image is dragged to an icon of a target application among the icons of the displayed applications, share the screenshot image through the target application.

9. The apparatus according to claim 8, wherein the image display module (302) is configured to display the preview image at the predetermined position of the display screen for a first predetermined time period, and if there is no operation with respect to the preview image, stop the display of the preview image after the first predetermined time period has elapsed.

10. The apparatus according to claim 8 or 9, wherein the image display module (302) is configured to display the preview image on upper right region of the display screen of the terminal, or display the preview image on upper left region of the display screen.

11. The apparatus according to any of claims 8 to 10, wherein the predetermined operation instruction comprises: a touch instruction for a second predetermined time period or a dragging operation instruction.

12. The apparatus according to any of claims 8 to 11, wherein the program display module (304) is configured to detect the type of the applications installed on the terminal, and display in a sequence, at a predetermined region of the display screen of the terminal, the icons of the applications which meet a predetermined type condition among the applications installed on the terminal.

13. The apparatus according to any of claims 8 to 12, wherein the target application comprises: communication-type application or text editing application.

14. The apparatus according to claim 13, wherein the content sharing module (306) comprises:
a program running sub-module (3061), configured to when it is detected that the preview image is dragged to the icon of the target application among the icons of the displayed applications, open the target application;
a first sharing sub-module (3062), configured to when the target application is a communication-type application, select a contact to share with in the target application and share the screenshot image with the contact; and
a second sharing sub-module (3063), configured to when the target application is a text editing application, insert the screenshot image into a target editing page of the text editing application.

15. A computer program product stored on a computer usable medium, comprising computer-readable program means for causing the computer to implement the method according to any of claims 1 to 7.
